# EUROPÄISCHE PATENTSCHRIFT

(11) **EP 3 669 446 B1**
(45) Veröffentlichungstag und Bekanntmachung des Hinweises auf die Patenterteilung: **09.10.2024**
(21) Anmeldenummer: 18753386.4
(22) Anmeldetag: 09.08.2018
(51) Int. Cl.: H02M 7/5395, H02M 1/14, H02M 1/32

(54) **VERFAHREN ZUR ANSTEUERUNG EINES PULSBREITENMODULIERTEN STROMRICHTERS, STEUERVORRICHTUNG FÜR EINEN PULSBREITENMODULIERTEN STROMRICHTER, STROMRICHTERANORDNUNG UND ELEKTRISCHES ANTRIEBSSYSTEM**
METHOD FOR CONTROLLING A PULSE-WIDTH-MODULATED POWER CONVERTER, CONTROL DEVICE FOR A PULSE-WIDTH-MODULATED POWER CONVERTER, POWER CONVERTER ASSEMBLY, AND ELECTRICAL DRIVE SYSTEM
PROCÉDÉ POUR COMMANDER UN CONVERTISSEUR MODULÉ EN LARGEUR D'IMPULSION, DISPOSITIF DE COMMANDE CONÇU POUR UN CONVERTISSEUR MODULÉ EN LARGEUR D'IMPULSION, ENSEMBLE CONVERTISSEUR ET SYSTÈME DE COMMANDE ÉLECTRIQUE

(30) Priorität: 15.08.2017 DE 102017214207
(43) Veröffentlichungstag der Anmeldung: 24.06.2020
(73) Patentinhaber: Robert Bosch GmbH, 70442 Stuttgart (DE)
(72) Erfinder: SPRENGER, Helge, 70806 Kornwestheim (DE); EINSELE, Florian, 70174 Stuttgart (DE)
(86) Internationale Anmeldenummer: PCT/EP2018/071581
(87) Internationale Veröffentlichungsnummer: WO 2019/034507

(56) Entgegenhaltungen:
- EP-A1- 2 816 713
- WO-A2-2005/081384
- DE-A1- 102011 104 441
- DE-A1- 102013 014 480
- US-A1- 2005 180 183
- US-A1- 2008 298 785
- US-A1- 2012 146 594

## Beschreibung

Die vorliegende Erfindung betrifft ein Verfahren zur Ansteuerung eines pulsbreitenmodulierten Stromrichters, eine Steuervorrichtung für einen pulsbreitenmodulierten Stromrichter, eine Stromrichteranordnung sowie ein elektrisches Antriebssystem.

Die Druckschrift DE 10 2013 014480 A1 offenbart ein Verfahren zum Betreiben eines Elektromotors. Die Druckschrift WO 2005/081384 A2 offenbart eine Vorrichtung und ein Verfahren zum Regeln einer Taktfrequenz eines Stromrichters. Die Druckschrift US 2005/180183 A1 offenbart ein Verfahren und ein System für einen verbesserten Inverter zum Betreiben einer Last. Die Druckschrift US 2012/146594 A1 offenbart Systeme und Verfahren für einen Tief-/ Hochsetzsteller mit einer verbesserten Effizienz. Die Druckschrift EP 2 816 713 A1 offenbart einen fahrzeuginternen Tiefsetzsteller mit einer Steuervorrichtung.

Die Druckschrift DE 10 2008 050 543 A1 offenbart eine Schutzschaltung für einen Zwischenkreis eines Wechselrichters gegen Überspannungen. Die Schutzschaltung ist zum Schutz des Zwischenkreises gegen Überspannungen vorgesehen, und weist ein dem Zwischenkreis vorgeschaltetes und überbrückbares Vorschaltelement zur Spannungsbegrenzung des Zwischenkreises auf. Das Vorschaltelement wird mittels eines mechanischen Schaltmittels überbrückt, welches in einem Einspeisebetrieb des Wechselrichters öffnet, wenn die Zwischenkreisspannung größer ist als ein vorgegebener Spannungsgrenzwert.

Wechselrichter für Elektro- und Hybridfahrzeuge weisen zum Eigenschutz vor zu hohen Zwischenkreisspannungen eine Überspannungsabschaltung auf. Diese Überspannungsabschaltung kann insbesondere als Hardware realisiert werden. Um die Zwischenkreisspannung im Fehlerfall so weit wie möglich zu begrenzen, wird eine untere Toleranzgrenze der Auslöseschwelle für die Überspannungsabschaltung so nahe wie möglich an den zulässigen Regelbereich des Wechselrichters gelegt.

Die Zwischenkreisspannung des Wechselrichters setzt sich hierbei aus einem Konstantanteil der Eingangsspannung und einem überlagernden Rippel zusammen. Der Rippel entsteht durch die Taktung der Pulsbreitenmodulation (engl. Pulse Width Modulation oder kurz PWM) der Wechselrichter-Endstufen. Dabei hängt der Rippel sehr stark von der Frequenz der Pulsbreitenmodulation, den Phasenströmen in dem Wechselrichter, dem Modulationsgrad und dem Leistungsfaktor einer an den Wechselrichter angeschlossenen elektrischen Maschine ab. Für die Festlegung der Schwelle zur Überspannungsabschaltung wird daher auf die maximale Betriebsspannung die Toleranz für die Ungenauigkeit der Zwischenkreisspannungserfassung und der maximale Spannungsrippel bei Betrieb an der maximalen Betriebsspannung hinzuaddiert. Dieser Wert definiert die minimal zulässige untere Eingreifgrenze für die Überspannungsabschaltung.

### Offenbarung der Erfindung

Die vorliegende Erfindung offenbart eine Stromrichteranordnung mit den Merkmalen des Patentanspruchs 1, ein elektrisches Antriebssystem mit den Merkmalen des Patentanspruchs 7 und ein Verfahren zur Ansteuerung eines pulsbreitenmodulierten Inverters mit den Merkmalen des Patentanspruchs 8.

Demgemäß ist vorgesehen:
Eine Steuervorrichtung für einen pulsbreitenmodulierten Stromrichter. Die Steuervorrichtung ist dazu ausgelegt, einen Wert einer Eingangsspannung des Stromrichters zu ermitteln und eine Frequenz für die Pulsbreitenmodulation in dem Stromrichter anzupassen, falls der Wert der ermittelten Eingangsspannung einen vorbestimmten Schwellwert überschreitet.

Ferner ist vorgesehen:
Stromrichteranordnung, mit einem pulsbreitenmodulierten Stromrichter, und einer erfindungsgemäßen Steuervorrichtung.

Weiterhin ist vorgesehen:
Ein elektrisches Antriebssystem mit einer elektrischen Maschine, einem pulsbreitenmodulierten Stromrichter und einer erfindungsgemäßen Steuervorrichtung für den pulsbreitenmodulierten Stromrichter.

Schließlich ist vorgesehen:
Ein Verfahren zur Ansteuerung eines pulsbreitenmodulierten Stromrichters. Das Verfahren umfasst einen Schritt zum Ermitteln einer elektrischen Eingangsspannung an den Stromrichter. Weiterhin umfasst das Verfahren einen Schritt zum Anpassen einer Frequenz für die Pulsbreitenmodulation in dem Stromrichter, falls der Wert der ermittelten Eingangsspannung einen vorbestimmten Schwellwert überschreitet.

### Vorteile der Erfindung

Der vorliegenden Erfindung liegt die Erkenntnis zugrunde, dass der Spannungsrippel an der Eingangsspannung eines pulsbreitenmodulierten Stromrichters, das heißt die Spannung im Zwischenkreis des Stromrichters, unter anderem von der Frequenz der Pulsbreitenmodulation in dem Stromrichter abhängt. Daher muss beispielsweise für das Einstellen der Eingreifgrenze für eine Überspannungsabschaltung in dem Stromrichter neben der maximal zulässigen Betriebsspannung auch der maximal auftretende Spannungsrippel berücksichtigt werden. Dieser maximal auftretende Spannungsrippel muss dabei zur maximalen Betriebsspannung hinzuaddiert werden. Dies kann zu einer relativ hohen Eingreifgrenze für das Ansprechen einer Überspannungsabschaltung führen.

Der vorliegenden Erfindung liegt daher die Idee zugrunde, dieser Erkenntnis Rechnung zu tragen und eine Ansteuerung für einen pulsbreitenmodulierten Stromrichter vorzusehen, welche insbesondere bei hohen Eingangsspannungen des Stromrichters den auftretenden Spannungsrippel verringert. Da der Stromrichter eines pulsbreitenmodulierten Stromrichters unter anderem auch von der Frequenz für die Pulsbreitenmodulation in dem Stromrichter abhängt, ist es daher vorgesehen, bei hohen Eingangsspannungen an dem Stromrichter die Frequenz für die Pulsbreitenmodulation anzupassen. Auf diese Weise kann bei hohen Eingangsspannungen der Spannungsrippel aufgrund der Pulsbreitenmodulation verringert werden. Durch die Verringerung des Spannungsrippels insbesondere bei hohen Eingangsspannungen ist es dabei möglich, die Spannungsschwelle für das Eingreifen einer Überspannungsabschaltung herabzusetzen. Bei niedrigen Eingangsspannungen dagegen ist auch ein relativ hoher Spannungsrippel eher unkritisch, so dass bei niedrigeren Eingangsspannungen keine oder nur ein relativ geringe Anpassung der Frequenz für die Pulsbreitenmodulation erfolgen muss.

Das Absenken der Ansprechschwelle für das Eingreifen einer Überspannungsabschaltung führt dazu, dass die maximal auftretenden elektrischen Spannungen in dem Stromrichter geringer sind. Hierdurch kann die Gefahr einer möglichen Beschädigung von Bauelementen in dem Stromrichter verringert werden. Auf diese Weise kann die Zuverlässigkeit und die Lebensdauer des Stromrichters gesteigert werden.

Darüber hinaus können aufgrund der niedrigeren Schwelle für das Eingreifen einer Überspannungsabschaltung und der damit verbundenen geringeren maximalen elektrischen Spannung in dem Stromrichter auch die Bauelemente in dem elektrischen Stromrichter entsprechend dimensioniert werden. Dies führt dazu, dass kleinere, leichtere und auch kostengünstigere Bauelemente eingesetzt werden können. Auf diese Weise kann der erforderliche Bauraum für den Stromrichter verkleinert werden und die Herstellungskosten für den Stromrichter können gesenkt werden.

Bei der Eingangsspannung, welche für die Anpassung der Frequenz der Pulsbreitenmodulation in dem Stromrichter herangezogen wird, handelt es sich insbesondere um die elektrische Spannung, welche während des Betriebs über einem Zwischenkreis des Stromrichters anliegt. Diese Eingangsspannung entspricht weitestgehend einer elektrischen Spannung, welche von einer Spannungsquelle, wie zum Beispiel einer Traktionsbatterie eines Elektro- oder Hybridfahrzeugs, bereitgestellt wird.

Unter der Frequenz für die Pulsbreitenmodulation in dem Stromrichter ist hierbei die im Allgemeinen als "PWM-Frequenz" bezeichnete Frequenz eines Stromrichters bzw. Inverters zu verstehen. Aufgrund der allgemein geläufigen Verwendung der Abkürzung PWM auf für die deutsche Bezeichnung "Pulsbreitenmodulation" wird diese Abkürzung auch hier im Folgenden verwendet. Insbesondere handelt es sich bei dieser PWM-Frequenz um die Frequenz, mit welcher die einzelnen Schaltelemente in dem Stromrichter ein- und ausgeschaltet werden. In der Regel ist diese PWM-Frequenz bei konventionellen Stromrichtern fest vorgegeben.

Der vorbestimmte Schwellwert der Eingangsspannung, bei dessen Überschreiten die Frequenz für die Pulsbreitenmodulation des Stromrichters angepasst wird, kann beispielsweise auf einen festen, konstanten Spannungswert eingestellt werden. Beispielsweise kann als vorbestimmter Schwellwert ein Spannungswert gewählt werden, der einem vorgegebenen Bruchteil der maximal zulässigen Spannung in dem Stromrichter entspricht. So kann zum Beispiel als vorbestimmter Schwellwert 50 %, 70 %, 80 %, 90 %, 92 % oder 95 % der maximal zulässigen Spannung bzw. maximalen Eingangsspannung in dem Stromrichter gewählt werden.

Gemäß einer Ausführungsform ist die Steuervorrichtung dazu ausgelegt, die Frequenz für die Pulsbreitenmodulation in dem Stromrichter auf einen vorgegebenen Wert einzustellen, falls der Wert der ermittelten Eingangsspannung den vorbestimmten Schwellwert überschreitet. Auf diese Weise wird besonders einfach die Frequenz für die Pulsbreitenmodulation angepasst, wenn die Eingangsspannung ansteigt. Gemäß einer Ausführungsform ist die Steuervorrichtung dazu ausgelegt, die Frequenz für die Pulsbreitenmodulation in dem Stromrichter gemäß einer vorbestimmten Funktion anzupassen, falls der Wert der ermittelten Eingangsspannung den vorbestimmten Schwellwert überschreitet. Durch das Anpassen der Frequenz für die Pulsbreitenmodulation auf Grundlage einer vorbestimmten Funktion kann die Frequenz für die Pulsbreitenmodulation über einen Regelbereich dynamisch angepasst werden. Auf diese Weise kann jeweils ein optimaler Arbeitspunkt für die Frequenz der Pulsbreitenmodulation gewählt werden. Als Funktion kann beispielsweise ein zumindest teilweise lineare Funktion, eine stufenförmige Funktion, eine quadratische Funktion oder eine beliebige andere Funktion gewählt werden.

Gemäß einer Ausführungsform spezifiziert die Funktion zum Anpassen der Frequenz für die Pulsbreitenmodulation die Frequenz in Abhängigkeit der Eingangsspannung des Stromrichters, der Frequenz der Ausgangsspannung des Stromrichters und/oder einem Sollwert für einen an den Stromrichter angeschlossenen Verbraucher. Ein solcher Sollwert eines Verbrauchers kann beispielsweise ein einzustellendes Drehmoment einer elektrischen Maschine, ein elektrischer Strom, wie zum Beispiel ein Phasenstrom oder auch ein beliebiger weiterer Parameter sein. Auf diese Weise kann beim Einstellen der Frequenz für die Pulsbreitenmodulation in dem Stromrichter jeweils ein besonders geeigneter Betriebspunkt eingestellt werden.

Gemäß einer Ausführungsform ist die Steuervorrichtung dazu ausgelegt, der Frequenz für die Pulsbreitenmodulation in dem Stromrichter ein Rauschen oder eine beliebige andere Funktion zu überlagern. Insbesondere kann beispielsweise der Frequenz für die Pulsbreitenmodulation ein schmalbandiges Rauschen überlagert werden. Hierdurch kann die elektromagnetische Verträglichkeit verbessert werden und mögliche Störeinflüsse auf andere elektronische Geräte in der Umgebung des Stromrichters können minimiert werden.

Gemäß einer Ausführungsform ist die Steuervorrichtung dazu ausgelegt, den Wert für die Eingangsspannung des Stromrichters mittels eines Spannungssensors zu erfassen. Zusätzlich oder alternativ kann die Steuervorrichtung auch dazu ausgelegt sein, den Wert für die Eingangsspannung des Stromrichters mittels einer Kommunikationsschnittstelle zu empfangen. Beispielsweise kann die Steuervorrichtung über eine geeignete Verbindung einen Wert einer angeschlossenen Spannungsquelle, wie zum Beispiel einer Traktionsbatterie eines Elektro- oder Hybridfahrzeugs empfangen und diesen empfangenen Spannungswert in Betracht ziehen. Hierbei kann beispielsweise der empfangene Spannungswert direkt als Eingangsspannung verwendet werden, oder es kann aus dem empfangenen Spannungswert ein Wert für die Eingangsspannung abgeleitet, das heißt berechnet werden. Darüber hinaus sind selbstverständlich auch beliebige weitere Möglichkeiten zur Erfassung der Eingangsspannung denkbar.

Gemäß einer Ausführungsform des Verfahrens zur Ansteuerung des pulsbreitenmodulierten Stromrichters wird der Schritt zum Anpassen der Frequenz für die Pulsbreitenmodulation die Frequenz für die Pulsbreitenmodulation erhöht, falls der Wert der ermittelten Eingangsspannung einen vorbestimmten Schwellwert überschreitet. Durch das Erhöhen der Frequenz für die Pulsbreitenmodulation sinkt in der Regel der Spannungsrippel. Somit kann es ermöglicht werden, dass insbesondere bei hohen Eingangsspannungen aufgrund des geringeren Spannungsrippel die vorhandene Überspannungsschutzvorrichtung nicht zu früh anspricht - oder anders ausgedrückt, die mögliche Eingreifschwelle für eine Überspannungsschutzvorrichtung kann herabgesetzt werden, da aufgrund des geringeren Spannungsrippels durch die höhere Frequenz der Pulsbreitenmodulation die maximale Gesamtspannung ebenfalls verringert wird. Gemäß einer Ausführungsform des Verfahrens zur Ansteuerung des Stromrichters passt der Schritt zum Anpassen der Frequenz für die Pulsbreitenmodulation die Frequenz für die Pulsbreitenmodulation nur dann an, falls die aktuelle Frequenz für die Pulsbreitenmodulation einen vorgegebenen Grenzwert unterschreitet. Hierdurch kann insbesondere bei einer dynamischen Anpassung der Frequenzen für die Pulsbreitenmodulation sichergestellt werden, dass nur bei niedrigen Frequenzen für die Pulsbreitenmodulation eine Modifikation der Frequenz für die Pulsbreitenmodulation erfolgt. Ist aufgrund einer dynamischen Anpassung der Pulsbreitenmodulationsfrequenz bereits eine hohe Frequenz für die Pulsbreitenmodulation gewählt, so kann von einer weiteren Modifikation und insbesondere Anhebung der Frequenz für die Pulsbreitenmodulation abgesehen werden.

Die obigen Ausgestaltungen und Weiterbildungen lassen sich soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines elektrischen Antriebssystems mit einer Steuervorrichtung für einen Stromrichter gemäß einer Ausführungsform;
- Figur 2:: eine schematische Darstellung eines Spannungs-Frequenz-Diagramms, wie es einer PWM-Frequenz-Anpassung gemäß einer Ausführungsform zugrunde liegt;
- Figur 3:: eine schematische Darstellung eines Spannungs-Frequenz-Diagramms wie es einer PWM-Frequenz-Anpassung gemäß einer weiteren Ausführungsform zugrunde liegt;
- Figur 4:: eine schematische Darstellung für das Anpassen der PWM-Frequenz gemäß einer Ausführungsform; und
- Figur 5:: eine schematische Darstellung eines Ablaufdiagramms, wie es einem Verfahren zur Ansteuerung eines pulsbreitenmodulierten Stromrichters gemäß einer Ausführungsform zugrunde liegt.

### Ausführungsformen der Erfindung

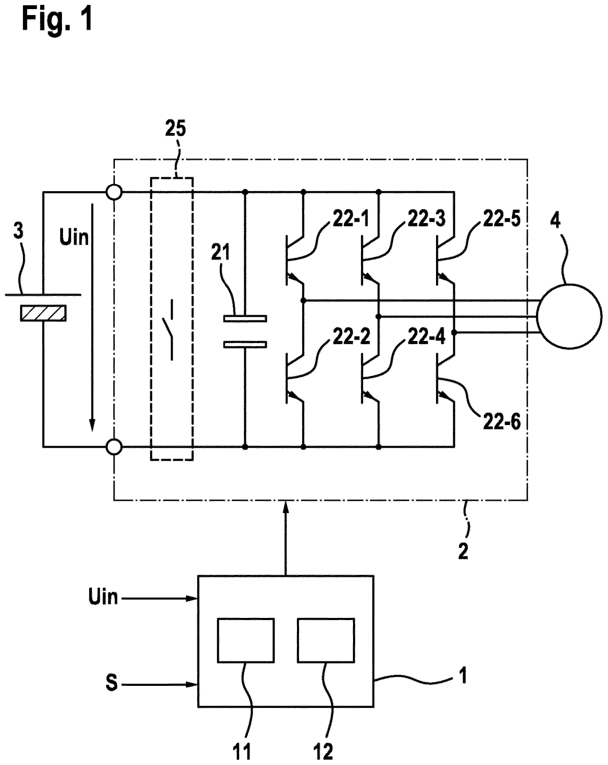

Figur 1 zeigt eine schematische Darstellung eines elektrischen Antriebssystems gemäß einer Ausführungsform. Das elektrische Antriebssystem umfasst eine Spannungsquelle 3. Beispielsweise kann es sich bei der Spannungsquelle 3 um eine Batterie, wie zum Beispiel eine Traktionsbatterie eines Elektro- oder Hybridfahrzeuges handeln. Grundsätzlich sind jedoch auch beliebige andere Spannungsquellen, insbesondere beliebige Gleichspannungsquellen möglich. Die Spannungsversorgung 3 ist an einem Eingangsanschluss eines Stromrichters 2 angeschlossen. Ausgangsseitig ist der Stromrichter 2 mit einem elektrischen Verbraucher 4 verbunden. Beispielsweise kann es sich bei diesem elektrischen Verbraucher 4 um eine elektrische Maschine, wie zum Beispiel einen Elektromotor oder ähnliches handeln. Dabei dient die hier dargestellte Form eines dreiphasigen elektrischen Verbrauchers nur als Beispiel und stellt keine Einschränkung der vorliegenden Erfindung dar. Ebenso können auch einphasige elektrische Verbraucher oder auch Verbraucher mit mehr als drei elektrischen Phasen vorgesehen sein.

An dem Stromrichter 2 kann eingangsseitig beispielsweise ein Zwischenkreiskondensator 21 vorgesehen sein. Weiterhin umfasst der Stromrichter 2 mehrere elektrische Schaltelemente 22-i. Beispielsweise kann für jede Phase des Ausgangsanschlusses des Stromrichters 2 eine Halbbrücke aus zwei elektrischen Schaltelementen 22-i vorgesehen sein. Auf diese Weise kann in dem hier dargestellten Beispiel mittels drei Halbbrücken eine B6-Brücke realisiert werden.

Die einzelnen Schaltelemente 22-i des Stromrichters 2 können beispielsweise von einer Steuervorrichtung 1 angesteuert werden. Hierzu kann grundsätzlich eine beliebige Ansteuerung, insbesondere eine beliebige pulsbreitenmodulierte Ansteuerung der einzelnen Schaltelemente 22-i mittels der Steuervorrichtung 1 realisiert werden.

Bei einer pulsbreitenmodulierte Ansteuerung der einzelnen Schaltelemente 22-i kann entsprechend den Tastverhältnissen der individuellen Ansteuersignale für die einzelnen Schaltelemente 22-i die jeweilige Ausgangsspannung bzw. der Ausgangsstrom in den einzelnen Phasen am Ausgang des Stromrichters 2 eingestellt werden. Da das Grundprinzip der pulsbreitenmodulierten Ansteuerung eines Stromrichters bekannt ist, wird dies im Folgenden nicht näher erläutert.

Die pulsbreitenmodulierte Ansteuerung der einzelnen Schaltelemente 22-i erfolgt hierbei mit einer vorgegebenen Frequenz (PWM-Frequenz). Grundsätzlich kann die PWM-Frequenz für die Ansteuerung der Schaltelemente 22-i auf einen festen, vorgegebenen Frequenzwert eingestellt werden. Insbesondere kann zum Beispiel eine Frequenz im Bereich von 9 kHz, 10 kHz oder auch einer beliebigen anderen fest vorgegebenen Frequenz gewählt werden. Gegebenenfalls kann die vorgegebene PWM-Frequenz zusätzlich mit einem schmalbandigen Signal, zum Beispiel einem schmalbandigen Rauschen überlagert werden. Auf diese Weise kann die elektromagnetische Verträglichkeit des Systems gesteigert werden.

Die Steuervorrichtung 1 kann somit basierend auf Sollwertvorgaben S die Ansteuerung der einzelnen Schaltelemente 22-i vornehmen. Bei den Sollwerten S kann es sich beispielsweise um Vorgaben wie ein Drehmoment einer angeschlossenen elektrischen Maschine, eine Drehzahl einer angeschlossenen elektrischen Maschine, Phasenströme oder -spannungen an den Ausgangsanschlüssen des Stromrichters 2, einen Leistungsfaktor, einen Modulationsgrad oder einen beliebigen weiteren Sollwert handeln.

Weiterhin kann die Steuervorrichtung 1 die Eingangsspannung Uin am Eingangsanschluss des Stromrichters 2 ermitteln. Zum Beispiel kann der Wert der Eingangsspannung in einer Erfassungseinrichtung 11 ermittelt werden. Beispielsweise kann hierzu am Eingangsanschluss des Stromrichters 2 ein Spannungssensor (nicht dargestellt) vorgesehen sein. Ein solcher Spannungssensor kann zum Beispiel in analoger oder digitaler Form ein Ausgangssignal bereitstellen, welches zu der Eingangsspannung am Stromrichter 2, insbesondere zu der Spannung über den Zwischenkreiskondensator 21 korrespondiert. Zusätzlich oder auch alternativ kann die Steuervorrichtung 1 auch ein analoges oder digitales Signal von einer weiteren Vorrichtung empfangen, welche ein zu der Eingangsspannung Uin korrespondierendes Signal bereitstellt. So kann zum Beispiel die Spannung einer angeschlossenen Batterie 3 erfasst werden und diese als Eingangsspannung Uin der Steuervorrichtung 1 bereitgestellt werden. Eine solche Erfassung der Batteriespannung kann beispielsweise mittels eines Batteriemanagementsystems (BMS) erfasst und bereitgestellt werden.

Die Steuervorrichtung 1 kann daraufhin die Frequenz für die Pulsbreitenmodulation in dem Stromrichter 2 unter Verwendung der Größe der Eingangsspannung Uin anpassen. Dies kann zum Beispiel in einer Recheneinrichtung 12 erfolgen. Beispielsweise kann der Stromrichter 2 mit einer ersten Frequenz für die Pulsbreitenmodulation (PWM-Frequenz) betrieben werden, solange die Eingangsspannung Uin an dem Stromrichter 2 einen vorgegebenen Schwellwert unterschreitet. Überschreitet die Eingangsspannung Uin den vorgegebenen Schwellwert, so kann die Steuervorrichtung 1 den Stromrichter 2 mit einer zweiten, von der ersten PWM-Frequenz abweichenden Frequenz ansteuern. Insbesondere kann die zweite PWM-Frequenz höher sein als die erste PWM-Frequenz. Der vorgegebene Schwellwert für den Wechsel zwischen den beiden PWM-Frequenzen kann in der Steuervorrichtung 1 fest vorgegeben werden. Darüber hinaus ist auch eine dynamische Anpassung des Schwellwerts für den Wechsel zwischen den PWM-Frequenzen möglich.

Neben dem zuvor beschriebenen sprunghaften Wechsel zwischen zwei PWM-Frequenzen ist darüber hinaus auch ein dynamisches Anpassen der PWM-Frequenz möglich. So kann beispielsweise die einzustellende PWM-Frequenz als eine beliebige Funktion in Abhängigkeit der Eingangsspannung Uin und gegebenenfalls einem oder mehrerer weiterer Parameter spezifiziert werden. Beispielsweise kann mit steigender Eingangsspannung Uin auch die PWM-Frequenz stufenweise, linear, quadratisch oder mit einer beliebigen anderen Funktion variiert, insbesondere angehoben werden. So ist es zum Beispiel auch möglich, bis zu einem vorgegebenen Schwellwert die PWM-Frequenz zunächst konstant zu halten und ab diesem Schwellwert die PWM-Frequenz linear oder basierend auf einer weiteren Funktion in Abhängigkeit der Eingangsspannung und gegebenenfalls weiterer Parameter anzupassen.

Als weitere Parameter für das Anpassen der PWM-Frequenz ist zum Beispiel eine Abhängigkeit von einem an einer angeschlossenen elektrischen Maschine 4 einzustellenden Drehmoment, eine Abhängigkeit von der Ausgangsfrequenz des Stromrichters 2, eine Abhängigkeit von der Ausgangsspannung des Stromrichters 2 oder einem beliebigen weiteren Parameter möglich. Insbesondere kann die Abhängigkeit der PWM-Frequenz von der Eingangsspannung und gegebenenfalls den weiteren Parametern in Form einer mathematischen Funktion oder auch in Form einer Tabelle in der Steuervorrichtung 1 spezifiziert werden.

Durch den Anstieg der PWM-Frequenz wird sich dabei in der Regel der Rippel auf der Eingangsseite des Stromrichters 2 verringern. Wird dabei, wie zuvor beschrieben, mit steigender Eingangsspannung Uin die PWM-Frequenz angehoben und hierdurch der Rippel auf der Eingangsseite verringert, so kann damit der Anstieg aus Summe von Eingangsspannung und Rippel im Vergleich zu einem System mit konstanter PWM-Frequenz verringert werden.

Zum Schutz des Stromrichters 2 kann in dem Stromrichter 2 beispielsweise eine Überspannungsschutzvorrichtung vorgesehen werden. Diese Überspannungsschutzvorrichtung 25 kann bei Überschreiten eines vorgegebenen Spannungswertes auf der Eingangsseite des Stromrichters 2 den Stromrichter 2 von einer Spannungsquelle 3 trennen. Hierdurch können gegebenenfalls Beschädigungen in dem Stromrichter 2 vermieden werden.

Durch das zuvor beschriebene Anpassen der PWM-Frequenz in Abhängigkeit der Eingangsspannung Uin kann, wie bereits angeführt, die Summe aus Eingangsspannung und Rippel im Vergleich zu einem unangepassten System herabgesetzt werden. Auf diese Weise wird daher gerade bei sehr hohen Rippel ein zu frühes Ansprechen der Überspannungsschutzvorrichtung 25 vermieden. Auf diese Weise können einerseits Störungen durch ein zu frühes Ansprechen der Überspannungsschutzvorrichtung 25 verhindert werden.

Darüber hinaus kann die Ansprechschwelle der Überspannungsschutzvorrichtung 25 niedriger eingestellt werden, so dass ein erhöhter Schutz des Stromrichters 2 gewährleistet ist.

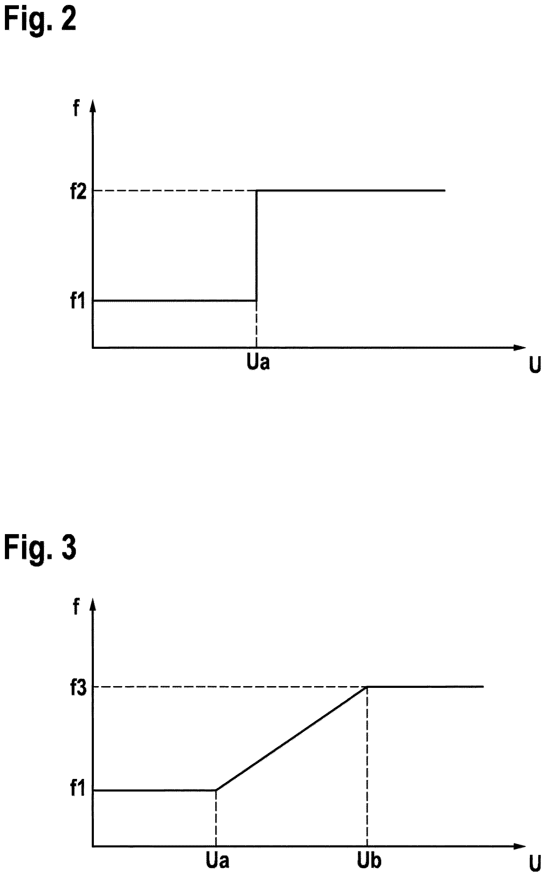

Figur 2 zeigt eine schematische Darstellung eines Verlaufs der PWM-Frequenz über die Eingangsspannung Uin gemäß einem Ausführungsbeispiel. Wie hierbei zu erkennen ist, wird unterhalb einer vorgegebenen Schwellspannung Ua der Stromrichter 2 mit einer ersten PWM-Frequenz f1 betrieben. Überschreitet die Eingangsspannung Uin an dem Stromrichter 2 den Schwellwert Ua, so wird der Stromrichter 2 mit einer zweiten PWM-Frequenz f2 betrieben.

Figur 3 zeigt eine schematische Darstellung eines Spannungs-Frequenzverlaufs gemäß einem weiteren Ausführungsbeispiel. Auch in diesem Ausführungsbeispiel wird unterhalb einer vorgegebenen Schwellspannung Ua der Stromrichter 2 mit einer ersten PWM-Frequenz f1 betrieben. Überschreitet die Eingangsspannung Uin den ersten Schwellwert Ua, so kann die PWM-Frequenz gemäß einer vorgegebenen Funktion, beispielsweise linear in Abhängigkeit der Eingangsspannung Uin angehoben werden. Oberhalb einer zweiten Schwellspannung Ub kann gegebenenfalls die PWM-Frequenz auf einen maximalen Wert f3 begrenzt werden.

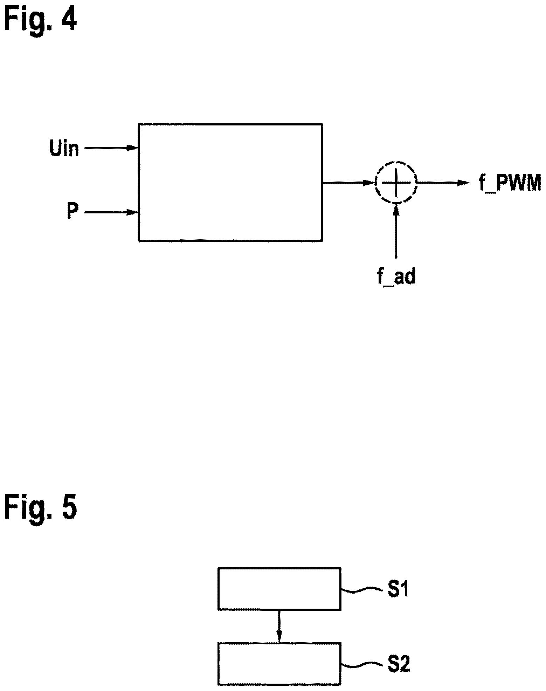

Figur 4 zeigt eine schematische Darstellung eines Blockschaltbilds zur Bestimmung der PWM-Frequenz f_PWM in Abhängigkeit der Eingangsspannung Uin und gegebenenfalls einem oder mehrerer weiterer Parameter P. Beispielsweise können die Eingangsspannung Uin und gegebenenfalls weitere optionale Parameter P der Steuervorrichtung 1 zugeführt werden. Die Steuervorrichtung 1 kann daraufhin basierend auf einer mathematischen Funktion oder unter Verwendung einer Tabelle (Look-Up-Table - LUT) aus den Eingangsparametern Uin und P eine vorgegebene PWM-Frequenz f_PWM ermitteln und diese für die Ansteuerung der Schaltelemente 22-i in dem Stromrichter 2 verwenden.

Gegebenenfalls kann die jeweils ermittelte PWM-Frequenz noch mit einem weiteren Signal f_ad, insbesondere einem weiteren hochfrequenten schmalbandigen Signal wie zum Beispiel einem schmalbandigen Rauschen überlagert werden. Auf diese Weise kann auch bei variabler PWM-Frequenz die elektromagnetische Verträglichkeit des Gesamtsystems gesteigert werden.

In den zuvor beschriebenen Ausführungsbeispielen wird für die Ansteuerung des Stromrichters 2 zunächst von einer konstanten PWM-Frequenz ausgegangen, welche erfindungsgemäß unter Verwendung der Eingangsspannung Uin angepasst, insbesondere angehoben werden kann. Darüber hinaus lässt sich das erfindungsgemäße Prinzip auch ebenso auf pulsbreitenmodulierte Stromrichter anwenden, welche bereits grundsätzlich eine variable PWM-Frequenz einsetzen. Solche Stromrichter können beispielsweise die PWM-Frequenz in Abhängigkeit von einzustellenden Sollwerten auf der Ausgangsseite anpassen. Auch eine Anpassung der PWM-Frequenz in Abhängigkeit der aktuellen Leistung, welche von dem Stromrichter 2 ausgegeben werden soll, ist möglich. Auch in diesem Fall kann die zunächst vorgegebene, variable PWM-Frequenz zusätzlich in Abhängigkeit von der Eingangsspannung Uin des Stromrichters 2 modifiziert, insbesondere angehoben werden.

Dabei kann beispielsweise eine Anpassung, insbesondere Anhebung der PWM-Frequenz auch nur bis zu einer maximalen vorgegebenen oberen PWM-Frequenz erfolgen. Wird der Stromrichter 2 dabei bereits aufgrund von weiteren externen Parametern mit einer maximalen PWM-Frequenz betrieben, so kann in diesem Fall von einer weiteren Anhebung der PWM-Frequenz in Abhängigkeit der Eingangsspannung Uin abgesehen werden. Darüber hinaus sind auch beliebige weitere Modifikationen zur Anpassung der PWM-Frequenz in Abhängigkeit von der Eingangsspannung Uin möglich.

Figur 5 zeigt eine schematische Darstellung eines Ablaufdiagramms, wie es einem Verfahren zur Ansteuerung eines pulsbreitenmodulierten Stromrichters gemäß einer Ausführungsform zugrunde liegt. In einem ersten Schritt S1 wird die elektrische Eingangsspannung Uin des Stromrichters 2 ermittelt. Die Ermittlung der Eingangsspannung Uin des Stromrichters 2 kann dabei auf beliebige Weise, insbesondere auf eine zuvor bereits beschriebene Weise durch Spannungsmessung oder Datenübertragung von einem Batteriemanagementsystem oder ähnlichem erfolgen.

In Schritt S2 wird daraufhin die Frequenz für die Pulsbreitenmodulation (PWM-Frequenz) in dem Stromrichter 2 angepasst, falls der Wert der ermittelten Eingangsspannung Uin einen vorbestimmten Schwellwert überschreitet. Insbesondere ist hierbei auch jede beliebige, insbesondere jede bereits zuvor beschriebene Anpassung der PWM-Frequenz in Abhängigkeit der Eingangsspannung Uin und gegebenenfalls auch in Abhängigkeit von weiteren Parametern möglich.

Der Schritt S2 zum Anpassen der PWM-Frequenz kann dabei insbesondere auf einen vorgegebenen maximalen Grenzwert begrenzt werden. Insbesondere wenn bereits auch weitere Parameter zur Anpassung der PWM-Frequenz für den Stromrichter 2 mit einbezogen werden, so kann ein Anpassen, insbesondere ein Anheben der PWM-Frequenz in Abhängigkeit von der Eingangsspannung Uin nur bis zu einer maximalen vorgegebenen oberen PWM-Frequenz limitiert werden.

Zusammenfassend betrifft die vorliegende Erfindung das Anpassen einer PWM-Frequenz in einem Stromrichter in Abhängigkeit von der Eingangsspannung des Stromrichters. Durch das Anpassen der PWM-Frequenz in dem Stromrichter in Abhängigkeit von der Eingangsspannung kann hierbei ein Rippel auf der Eingangsseite des Stromrichters variiert werden. Insbesondere ist es dabei bei hohen Eingangsspannungen möglich, durch Anpassen der PWM-Frequenz den Rippel zu minimieren und somit die Summe aus Eingangsspannung und Rippel herabzusetzen.

## Patentansprüche

1. Stromrichteranordnung,
mit einem pulsbreitenmodulierten Stromrichter (2),
und einer Steuervorrichtung (1),
wobei der Stromrichter eine Überspannungsschutzvorrichtung (25) umfasst und bei dem Einstellen einer Eingreifgrenze für die Überspannungsschutzvorrichtung (25) maximal auftretende Spannungsrippel berücksichtigt werden,
wobei die Steuervorrichtung dazu ausgelegt ist, einen Wert einer Eingangsspannung (Uin) des Stromrichters (2) zu ermitteln, und eine Frequenz für die Pulsbreitenmodulation in dem Stromrichter (2) anzupassen, falls der Wert der ermittelten Eingangsspannung (Uin) einen vorbestimmten Schwellwert überschreitet,
wobei
das Anpassen der Frequenz für die Pulsbreitenmodulation in dem Stromrichter (2) ein Erhöhen der Frequenz für die Pulsbreitenmodulation zur Verringerung der auftretenden Spannungsrippel umfasst sodass eine Summe aus Eingangsspannung und Spannungsrippel herabgesetzt wird und ein zu frühes Ansprechen der Überspannungsschutzvorrichtung (25) vermieden wird.

2. Stromrichteranordnung nach Anspruch 1, wobei die Steuervorrichtung (1) dazu ausgelegt ist, die Frequenz für die Pulsbreitenmodulation in dem Stromrichter (2) auf einen vorgegebenen Wert einzustellen, falls der Wert der ermittelten Eingangsspannung (Uin) den vorbestimmten Schwellwert überschreitet.

3. Stromrichteranordnung nach Anspruch 1, wobei die Steuervorrichtung (1) dazu ausgelegt ist, die Frequenz für die Pulsbreitenmodulation in dem Stromrichter (2) gemäß einer vorbestimmten Funktion anzupassen, falls der Wert der ermittelten Eingangsspannung (Uin) den vorbestimmten Schwellwert überschreitet.

4. Stromrichteranordnung nach Anspruch 3, wobei die vorbestimmte Funktion die Frequenz für die Pulsbreitenmodulation in dem Stromrichter (2) in Abhängigkeit der Eingangsspannung (Uin) des Stromrichters (2), einer Frequenz einer Ausgangsspannung des Stromrichters (2) und/oder einem Sollwert eines an den Stromrichter (2) anzuschließenden Verbrauchers (4) spezifiziert.

5. Stromrichteranordnung nach einem der Ansprüche 1 bis 4, wobei die Steuervorrichtung (1) ferner dazu ausgelegt ist, die Frequenz für die Pulsbreitenmodulation in dem Stromrichter (2) mit einem zusätzlichen hochfrequenten Signal zu überlagern.

6. Stromrichteranordnung nach einem der Ansprüche 1 bis 5, wobei die Steuervorrichtung (1) dazu ausgelegt ist, den Wert für die Eingangsspannung (Uin) des Stromrichters (2) mittels eines Spannungssensors zu erfassen und/oder den Wert für die Eingangsspannung (Uin) des Stromrichters (2) mittels einer Kommunikationsschnittstelle zu empfangen.

7. Elektrisches Antriebssystem, mit:
einer elektrischen Maschine (4) und einer Stromrichteranordnung nach einem der Ansprüche 1 bis 6 diedazu ausgelegt ist, die elektrische Maschine (4) anzusteuern.

8. Verfahren zur Ansteuerung eines pulsbreitenmodulierten Stromrichters (2) mit einer Überspannungsschutzvorrichtung (25), wobei bei dem Einstellen einer Eingreifgrenze für die Überspannungsschutzvorrichtung (25) maximal auftretende Spannungsrippel berücksichtigt werden,
mit den Schritten:
Ermitteln (S1) einer elektrischen Eingangsspannung (Uin) an dem Stromrichter (2); und
Anpassen (S2) einer Frequenz für die Pulsbreitenmodulation in dem Stromrichter (2), falls der Wert der ermittelten Eingangsspannung (Uin) einen vorbestimmten Schwellwert überschreitet,
**dadurch gekennzeichnet, dass**
das Anpassen (S2) der Frequenz für die Pulsbreitenmodulation in dem Stromrichter (2) ein Erhöhen der Frequenz für die Pulsbreitenmodulation zur Verringerung der auftretenden Spannungsrippel umfasst,
sodass eine Summe aus Eingangsspannung und Spannungsrippel herabgesetzt wird und ein zu frühes Ansprechen der Überspannungsschutzvorrichtung (25) vermieden wird.

9. Verfahren nach Anspruch 8, wobei der Schritt (S2) zum Anpassen der Frequenz für die Pulsbreitenmodulation die Frequenz für die Pulsbreitenmodulation nur dann anpasst, falls eine aktuelle Frequenz für die Pulsbreitenmodulation einen vorgegebenen Grenzwert unterschreitet.

## Claims

1. Power converter assembly
having a pulse-width-modulated power converter (2)
and a control device (1),
wherein the power converter comprises an overvoltage protection device (25), and maximum occurring voltage ripples are taken into account when setting a response threshold for the overvoltage protection device (25), wherein the control device is designed to ascertain a value of an input voltage (Uin) of the power converter (2), and to adjust a frequency for the pulse-width modulation in the power converter (2) if the value of the ascertained input voltage (Uin) exceeds a predetermined threshold,
wherein adjusting the frequency for the pulse-width modulation in the power converter (2) involves increasing the frequency for the pulse-width modulation in order to reduce the occurring voltage ripple such that a sum of input voltage and voltage ripple is reduced and the overvoltage protection device (25) is prevented from responding too early.

2. Power converter assembly according to Claim 1, wherein the control device (1) is designed to set the frequency for the pulse-width modulation in the power converter (2) to a specified value if the value of the ascertained input voltage (Uin) exceeds the predetermined threshold.

3. Power converter assembly according to Claim 1, wherein the control device (1) is designed to adjust the frequency for the pulse-width modulation in the power converter (2) according to a predetermined function if the value of the ascertained input voltage (Uin) exceeds the predetermined threshold.

4. Power converter assembly according to Claim 3, wherein the predetermined function specifies the frequency for the pulse-width modulation in the power converter (2) as a function of the input voltage (Uin) of the power converter (2), a frequency of an output voltage of the power converter (2) and/or a setpoint value of a load (4) that is to be connected to the power converter (2).

5. Power converter assembly according to any one of Claims 1 to 4, wherein the control device (1) is additionally designed to overlay the frequency for the pulse-width modulation in the power converter (2) with an additional highfrequency signal.

6. Power converter assembly according to any one of Claims 1 to 5, wherein the control device (1) is designed to detect the value for the input voltage (Uin) of the power converter (2) by means of a voltage sensor and/or to receive the value for the input voltage (Uin) of the power converter (2) by means of a communication interface.

7. Electrical drive system having:
an electrical machine (4) and a power converter assembly according to any one of Claims 1 to 6 which is designed to control the electrical machine (4).

8. Method for controlling a pulse-width-modulated power converter (2) having an overvoltage protection device (25), wherein maximum occurring voltage ripples are taken into account when setting a response threshold for the overvoltage protection device (25), having the steps of:
ascertaining (S1) an electrical input voltage (Uin) to the power converter (2); and
adjusting (S2) a frequency for the pulse-width modulation in the power converter (2) if the value of the ascertained input voltage (Uin) exceeds a predetermined threshold,
**characterized in that**
adjusting (S2) the frequency for the pulse-width modulation in the power converter (2) involves increasing the frequency for the pulse-width modulation in order to reduce the occurring voltage ripple such that a sum of input voltage and voltage ripple is reduced and the overvoltage protection device (25) is prevented from responding too early.

9. Method according to Claim 8, wherein the step (S2) for adjusting the frequency for the pulse-width modulation adjusts the frequency for the pulse-width modulation only if a current frequency for the pulse-width modulation falls below a specified limit value.

## Revendications

1. Agencement de convertisseur statique,
comprenant un convertisseur statique à modulation de largeur d'impulsion (2),
et un dispositif de commande (1),
le convertisseur statique comprenant un dispositif de protection contre les surtensions (25) et des ondulations de tension maximales se produisant étant prises en compte lors du réglage d'une limite d'intervention pour le dispositif de protection contre les surtensions (25),
le dispositif de commande étant conçu pour déterminer une valeur d'une tension d'entrée (Uin) du convertisseur statique (2), et pour adapter une fréquence pour la modulation de largeur d'impulsion dans le convertisseur statique (2) dans le cas où la valeur de tension d'entrée (Uin) déterminée dépasse une valeur de seuil prédéterminée,
l'adaptation de la fréquence pour la modulation de largeur d'impulsion dans le convertisseur statique (2) comprenant une augmentation de la fréquence pour la modulation de largeur d'impulsion afin de réduire les ondulations de tension qui se produisent, de sorte qu'une somme de la tension d'entrée et des ondulations de tension est abaissée et qu'une réaction trop précoce du dispositif de protection contre les surtensions (25) est évitée.

2. Agencement de convertisseur statique selon la revendication 1, le dispositif de commande (1) étant conçu pour régler la fréquence pour la modulation de largeur d'impulsion dans le convertisseur statique (2) à une valeur prédéfinie dans le cas où la valeur de la tension d'entrée (Uin) déterminée dépasse la valeur de seuil prédéterminée.

3. Agencement de convertisseur statique selon la revendication 1, le dispositif de commande (1) étant conçu pour régler la fréquence pour la modulation de largeur d'impulsion dans le convertisseur statique (2) conformément à une fonction prédéterminée dans le cas où la valeur de la tension d'entrée (Uin) déterminée dépasse la valeur de seuil prédéterminée.

4. Agencement de convertisseur statique selon la revendication 3, la fonction prédéterminée spécifiant la fréquence pour la modulation de largeur d'impulsion dans le convertisseur statique (2) en fonction de la tension d'entrée (Uin) du convertisseur statique (2), d'une fréquence d'une tension de sortie du convertisseur statique (2) et/ou d'une valeur de consigne d'un consommateur (4) à raccorder au convertisseur statique (2).

5. Agencement de convertisseur statique selon l'une des revendications 1 à 4, le dispositif de commande (1) étant en outre conçu pour superposer un signal haute fréquence supplémentaire à la fréquence pour la modulation de largeur d'impulsion dans le convertisseur statique (2).

6. Agencement de convertisseur statique selon l'une des revendications 1 à 5, le dispositif de commande (1) étant conçu pour détecter la valeur pour la tension d'entrée (Uin) du convertisseur statique (2) au moyen d'un capteur de tension et/ou pour recevoir la valeur pour la tension d'entrée (Uin) du convertisseur statique (2) au moyen d'une interface de communication.

7. Système d'entraînement électrique, comprenant :
une machine électrique (4) et un agencement de convertisseur statique selon l'une des revendications 1 à 6, qui est conçu pour commander la machine électrique (4).

8. Procédé de commande d'un convertisseur statique (2) à modulation de largeur d'impulsion comprenant un dispositif (25) de protection contre les surtensions, des ondulations de tension maximales se produisant étant prises en compte lors du réglage d'une limite d'intervention pour le dispositif de protection contre les surtensions (25), comprenant les étapes suivantes :
détermination (S1) d'une tension d'entrée (Uin) électrique au niveau du convertisseur statique (2) ; et
adaptation (S2) d'une fréquence pour la modulation de largeur d'impulsion dans le convertisseur statique (2) dans le cas où la valeur de la tension d'entrée (Uin) déterminée dépasse une valeur de seuil prédéterminée,
**caractérisé en ce que**
l'adaptation (S2) de la fréquence pour la modulation de largeur d'impulsion dans le convertisseur statique (2) comprend une augmentation de la fréquence pour la modulation de largeur d'impulsion afin de réduire les ondulations de tension qui se produisent, de sorte qu'une somme de la tension d'entrée et des ondulations de tension est abaissée et qu'une réaction trop précoce du dispositif de protection contre les surtensions (25) est évitée.

9. Procédé selon la revendication 8, l'étape (S2) d'adaptation de la fréquence de modulation de largeur d'impulsion n'adaptant la fréquence de modulation de largeur d'impulsion que dans le cas où une fréquence actuelle de modulation de largeur d'impulsion devient inférieure à une valeur limite prédéfinie.
